# EUROPÄISCHE PATENTSCHRIFT

(11) **EP 0 524 647 B1**
(45) Veröffentlichungstag und Bekanntmachung des Hinweises auf die Patenterteilung: **08.04.1998**
(21) Anmeldenummer: 92112712.2
(22) Anmeldetag: 24.07.1992
(51) Int. Cl.: A22B 3/00, A22B 7/00

(54) **Rinderschlachtverfahren und Rinderschlachtanlage**
Method and apparatus for slaughtering cattle
Procédé et installation d'abbatage de bovins

(30) Priorität: 26.07.1991 DE 4124887
(43) Veröffentlichungstag der Anmeldung: 27.01.1993
(73) Patentinhaber: Banss Maschinenfabrik GmbH & Co. KG, D-35216 Biedenkopf (DE)
(72) Erfinder: Runkel, Gerhard, W-6347 Angelburg-Gönnern (DE)
(74) Vertreter: Klunker . Schmitt-Nilson . Hirsch

(56) Entgegenhaltungen:
- AU-B- 571 286
- DE-U- 9 014 058
- US-A- 3 149 370
- US-A- 3 191 220

## Beschreibung

Gegenstand der Erfindung ist ein Verfahren zum Schlachten von Tieren, bei dem mit jedem Tier einer Reihe von Tieren folgendermaßen vorgegangen wird:
(a) das Tier wird stehend betäubt oder getötet;
(b) das Tier wird durch Umfallenlassen in eine seitlich liegende Position auf einem ersten Transporteur gebracht, wobei der Tierrücken in Transportrichtung weist;
(c) und während des Transports auf dem ersten Transporteur wird das Tier abgestochen und entblutet;
(d) das Tier wird an einen zweiten Transporteur übergeben und auf diesem in auf dem Rücken liegender Position weitertransportiert,
(e) und das Tier wird kopfunten hängend mittels eines Förderers weitertransportiert, wobei weitere Schlachtschritte durchgeführt werden;
   dadurch gekennzeichnet,
   daß nach dem Verfahren Großtiere, insbesondere Rinder, geschlachtet werden und daß bei jedem Tier einer Reihe von Tieren
(f) während des Transports auf dem zweiten Transporteur die Hinterfüße des Tiers abgesetzt und das Tier mit beiden Hinterbeinen an Transporthaken angehängt wird.

Gegenstand der Erfindung ist ferner eine Schlachtanlage, bei der folgende Einrichtungen hintereinander vorgesehen sind:
(a) eine Betäubungsbox oder eine Tötungsbox;
(b) ein erster Transporteur für ein Transportieren der Tiere in seitlich liegender, mit dem Rücken in Transportrichtung weisender Position, wobei dem ersten Transporteur eine Abstechstation zugeordnet ist;
(c) ein zweiter Transporteur für ein Transportieren der Tiere in auf dem Rücken liegender Position;
(d) ein Elevator zum Wegheben der angehängten Tiere von dem zweiten Transporteur;
(e) und ein Förderer zum Fördern der kopfunten hängenden Tiere zu weiteren Schlachtstationen,
   dadurch gekennzeichnet,
   daß bei der für Großtiere, insbesondere Rinder, ausgebildeten Schlachtanlage
(f) dem zweiten Transporteur Arbeitsstationen zum Absetzen beider Hinterfüße jedes Tiers und zum Anhängen der beiden Hinterbeine jedes Tiers an Transporthaken zugeordnet sind.

Ein Verfahren zum Schlachten von Schweinen mit den oben angegebenen Verfahrensmerkmalen (a) bis (e) und eine Schlachtanlage für Schweine mit den weiter oben angegebenen Vorrichtungsmerkmalen (a) bis (e) sind aus der US-A-3 149 370 bekannt. Bei diesem Stand der Technik ist der zweite Transporteur ein kurzer, nach unten geneiger Rollgang, auf dein kein Absetzen der Hinterfüße der Tiere stattfindet. Die gezeichnete Rückenlage eines Schweins auf dem Rollgang ist eher zufällig.

Die Erfindung ergibt bequeme Arbeitsbedingungen beim Abstechen, Absetzen der Hinterfüße und Anhängen der Hinterbeine. Das Transportieren auf dem ersten Transporteur mit in Transportrichtung weisendem Tierrücken erleichtert eine problemlose Übergabe an den zweiten Transporteur. Bemerkenswert ist ferner die erreichte, enge Verknüpfung von Betäuben oder Töten, Entbluten, Absetzen der Hinterfüße und Anhängen der Hinterbeine an Transporthaken. In der auf dein Rücken liegenden Transportierposition können die Hinterfüße der Tiere besonders bequem abgesetzt werden und können die Hinterbeine der Tiere besonders bequem an Transporthaken angehängt werden.

Vorzugsweise weist auf dem zweiten Transporteur die Längserstreckung des Tieres im wesentlichen in Transportrichtung oder - mit anderen Worten - hat der zweite Transporteur eine Transportrichtung quer zu der Transportrichtung des ersten Transporteurs. Alternativ kann jedoch der zweite Transporteur eine Transportrichtung haben, die im wesentlichen mit der Transportrichtung des ersten Transporteurs übereinstimmt. Ein Transporteur, auf dein Schlachttiere auf dein Rücken liegend und mit ihrer Längserstreckung in Transportrichtung weisend transportiert werden, ist aus der AU-B-571286 bekannt.

Günstigerweise kann man bei der Erfindung an dem ersten Transporteur außer dem Abstechen und Entbluten weitere Arbeiten ausführen, insbesondere Abbinden der Speiseröhre und/oder Reinigung des Afterbereichs.

Vorzugsweise weist die erfindungsgemäße Schlachtanlage eine Einrichtung zum Verhindern von unerwünscht weitgehendem Abrollen der Schlachttiere bei der Übergabe von der Betäubungsbox oder der Tötungsbox auf den ersten Transporteur auf, wobei zwei Ausführungsformen dieser Einrichtung in den Ansprüchen 6 und 7 angegeben sind.

Aus der US-A-3 191 220 ist eine Einrichtung zum Steuern des seitlichen Umfallens von betäubten Schlachtschweinen bekannt, die eine unter dem Gewicht des umfallenden Schweins seitlich wegschwenkende Wand aus Gummi-Flachmaterial aufweist. Die Wand ist an einer oberen, waagerechten Stange schwenkbar befestigt.

Der Begriff "Elevator" wird in der vorliegenden Patentschrift im umfassenden Sinn benutzt zur Bezeichnung jeder Einrichtung, mit der sich ein Schlachttier mit oben befindlichen Hinterbeinen unter Verlagerung seines Schwerpunkts nach oben anheben läßt. Typische Beispiele sind Förderer mit schräg nach oben verlaufender Bewegungsbahn (sei es als Einfachelevator mit einer Rohrbahn, sei es als Doppelelevator mit zwei parallelen Rohrbahnen, nämlich eine für Transporthaken für linke Hinterbeine und eine für Transporthaken für rechte Hinterbeine) und - beispielsweise windenartige - Hebeeinrichtungen, die Traversen zum Anhängen der zwei Hinterbeine eines Schlachttiers aufweisen. Der in der vorliegenden Patentschrift verwendete Begriff "an Transporthaken angehängt" soll auch diejenigen Fälle umfassen, bei denen die Schlachttiere auf beliebige Weise hängend mit längs des Transporteurs bewegbaren Tragelementen, die streng betrachtet keine Haken sind, verbunden sind.

Die Erfindungen und Ausgestaltungen der Erfindungen werden nachfolgend anhand eines schematisiert zeichnerisch dargestellten Ausführungsbeispiels noch näher erläutert. Es zeigt:
- Fig. 1 -: einen Teil einer Schlachtanlage in Seitenansicht;
- Fig. 2 -: den Schlachtanlagenteil von Fig. 1 in Draufsicht;
- Fig. 3 -: einen Teil der Schlachtanlage von Fig. 1 und 2 in Frontalansicht gemäß Pfeil III in Fig. 2;
- Fig. 4 -: einen Schnitt der Schlachtanlage von Fig. 1 bis 3 gemäß IV-IV in Fig. 2.

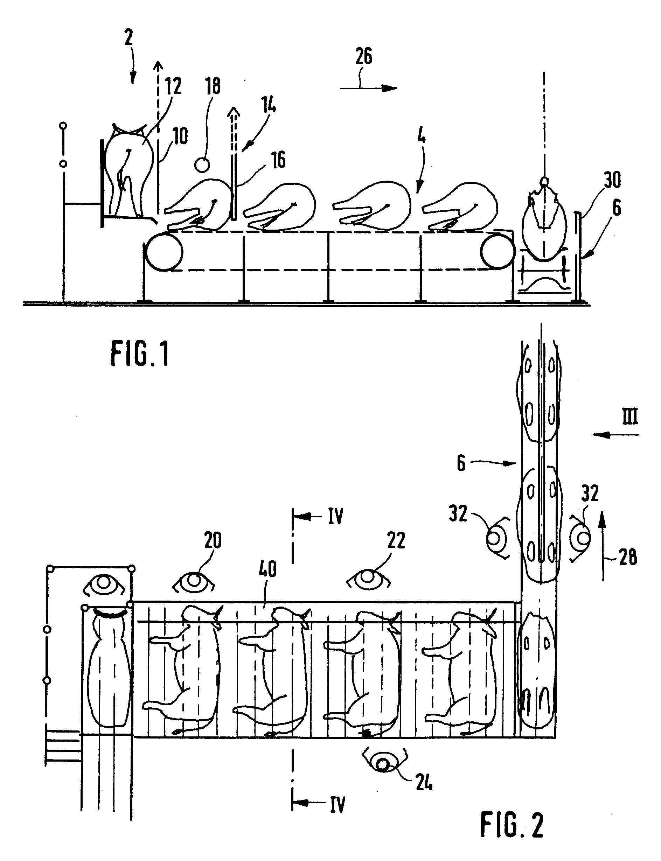

Die wesentlichsten Bestandteile der in Fig. 1 bis 4 gezeichneten Schlachtanlage sind eine Betäubungstox 2, ein erster Transporteur 4 in Form eines endlosen Plattenbandes, ein zweiter Transporteur 6 in Form eines endlosen Plattenbandes, und ein Elevator 8. Die genannten Bestandteile schließen räumlich aneinander an, wobei der Elevator 8 bereits über dem Endbereich des zweiten Transporteurs 6 beginnt.

Die Betäubungsbox 2 hat an ihrer dem ersten Transporteur 4 zugewandten Seite eine hebbare oder aufschwenkbare Seitenwand 10. Wenn ein in der Betäubungsbox 2 stehendes Tier 12, beispielsweise elektrisch, betäubt worden ist, wird die Seitenwand 10 geöffnet, und das Tier fällt abrollend mit seiner in Fig. 1 rechten Seite voran auf den ersten Transporteur 4. Damit das Tier nicht über seine seitlich liegende Lage hinaus abrollt, ist eine Vorrichtung 14 vorgesehen, die ein weiteres Abrollen verhindert. Die Vorrichtung 14 besteht im wesentlichen aus einer vertikalen Wand 16, die hydraulisch oder pneumatisch heb- und senkbar ist. In ihrer abgesenkten Sperrstellung reicht die Wand 16 bis relativ kurz über die Oberseite des ersten Transporteurs 4. Die Wand 16 ist in einem derattigen seitlichen Abstand zu der Seitenwand 10 der Betäubungsbox 2 angeordnet, daß das Tier 12 zwar aus der Box 2 seitlich abrollend herausfallen und in seitlich liegender Position auf den ersten Transporteur 4 gelangen kann, aber dann nicht weitergehend abrollt. In ihrer angehobenen Offenstellung läßt die Wand 16 genügend Freiraum, daß das Tier unter ihr hindurch gefördert werden kann.

Alternativ kann die Vorrichtung 14 simpel aus einer Stange 18 oder einer Anordnung von Stangen bestehen, die ein Stück oberhalb der Oberseite des ersten Transporteurs 4 angeordnet ist, und zwar so, daß sie sich im wesentlichen in Längserstreckung des Tiers 12 bzw. zur Transportrichtung des ersten Transporteurs 4 erstreckt. Der Abstand der Stange 18 von der Oberseite des ersten Transporteurs 4 und von der Seitenwand 10 der Box 2 ist so gewählt, daß das aus der Box 2 herausfallende Tier 12 mit seinem Rücken gerade knapp links-unterhalb der Stange 18 vorbeifallen kann, daß aber die Beine des Tiers 12 gegen ein weitergehendes Abrollen gesperrt sind.

Die Wand 16 und die Stange 18 können auch kombinativ vorgesehen sein.

Längs des ersten Transporteurs 4 sind an dessen für die Tierköpfe vorgesehenen Rand zwei Arbeitsstationen vorgesehen, nämlich eine Abstechstation 20 und eine Station 22, wo die Speiseröhre des Tiers im Halsbereich freigelegt und abgebunden wird. An dem anderen Rand des Transporteurs ist eine weitere Arbeitsstation 24 vorgesehen, wo der Afterbereich des Tiers 12 durch Abspritzen mit Wasser gereinigt wird.

Statt der beschriebenen Betäubungsbox 2 kann eine Tötungsbox vorgesehen sein, in der das betreffende Tier 12 z.B. durch Bolzenschuß getötet wird. Das anschließende Abrollen auf den ersten Transporteur 4 erfolgt in der beschriebenen Weise.

Bevor an dem auf dem ersten Transporteur 4 liegenden Tier gearbeitet wird, muß sichergestellt sein, daß es nicht mehr zu reflexartigen Zuckungen, insbesondere einem Schlagen der Beine, des Tiers 12 kommen kann, was die Arbeitspersonen gefährden könnte. Zu diesem Zweck wird zuerst entweder ein sogenannter Hirnstab gesetzt, also ein Metallstab in die Schußöffnung bis hin zum oberen Endbereich des Rückenmarks eingeschoben, um dort das Rückenmark zu durchtrennen. Insbesondere bei elektrischer Betäubung kann man stattdessen auch mit dem Hindurchleiten eines Ruhigstellungsstroms relativ niedriger Spannung arbeiten.

Alternativ kann man aber auch - was erfindunsgemäß bevorzugt ist - mittels eines speziellen Bolzenschußgeräts töten, das im Gehirnbereich des tiers eine Gasmenge freisetzt. In diesem Fall kann es entbehrlich sein, die beschriebenen Mittel zur Ausschaltung von Reflexen einzusetzen.

Auf dem ersten Transporteur 4 werden also die Tiere 12 der Reihe nach seitlich liegend und mit dem Rücken in Transportrichtung 26 des ersten Transporteurs 4 weisend kontinuierlich transportiert. Am Ende des ersten Transporteurs 4 erfolgt eine Übergabe auf den zweiten Transporteur 6. Der zweite Transporteur 6 hat eine Transportrichtung 28, die rechtwinklig zur Transportrichtung 26 ist. Die Platten des Plattenbandes des zweiten Transporteurs 6 haben eine oberseitig konkave bzw. V-förmige Kontur. Die Oberseite des zweiten Transporteurs 6 liegt etwas tiefer als die Oberseite des ersten Transporteurs 4, so daß die Tiere 12 bei der Übergabe um etwa 90° abrollen und dann mit ihrem Rücken auf dem zweiten Transporteur 6 liegen. Die Tiere 12 liegen auf dem zweiten Transporteur 6 im wesentlichen mit ihrer Längserstreckung in Transportrichtung 28, und zwar mit ihrem Kopf in Transportrichtung weisend. Im Übergabebereich der beiden Transporteure 4, 6 weist der zweite Transporteur 6 eine höhergezogene Wand 30 auf, die ein zu weitgehendes Abrollen der Tiere 12 bei der Übergabe verhindert.

Beidseitig des zweiten Transporteurs 6 sind Arbeitsstationen 32 vorgesehen. Die dort arbeitenden Personen setzen die beiden Hinterfüße 34 des betreffenden Tiers 12 ab, legen die Hintebeingelenke zum Einbringen von Transporthaken frei und hängen die Hinterbeine 36 in Transporthaken 38 ein. Es ist ersichtich, daß diese Tätigkeiten sehr bequem von beiden Seiten des zweiten Transporteurs 6 her an den nach oben ragenden Hinterfüßen 34 und Hinterbeinen 36 vorgenommen werden können.

Gegen Ende des zweiten Transporteurs 6 kommen die Transporthaken 38 in Eingriff mit Mitnehmern des Elevators 8. Das betreffende Tier wird mit den Hinterbeinen nach oben voran allmählich von dem zweiten Transporteur 6 weggehoben, bis es hinter dem zweiten Transporteur 6 frei mit dem Kopf nach unten hängt. Von dort wird das betreffende Tier mit üblichen Rohrbahnförderern zu den üblichen weiteren Schlachtstationen gefördert, insbesondere zum Enthäuten, zum Absetzen des Kopfes, zur Entnahme der Organe und zum Spalten in zwei Tierhälften.

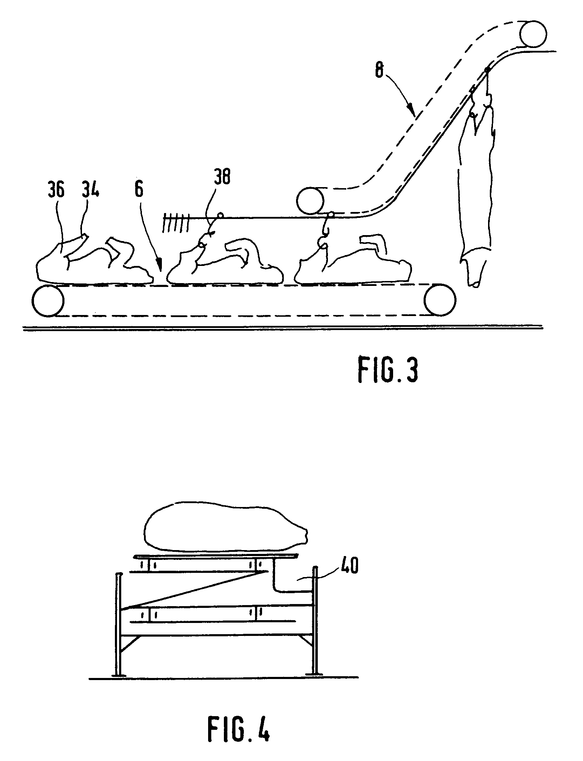

Fig. 4 veranschaulicht eine Entblutungsrinne 40, die vertieft längs desjenigen Rands des ersten Transporteurs 4 vorgesehen ist, wo sich die Köpfe der Tiere 12 befinden.

Es versteht sich, daß sowohl der erste Transporteur 4 als auch der zweite Transporteur 6 die Tiere 12 im wesentlichen horizontal transportieren.

## Patentansprüche

1. Verfahren zum Schlachten von Tieren, bei dem mit jedem Tier (12) einer Reihe von Tieren (12) folgendermaßen vorgegangen wird:
(a) das Tier (12) wird stehend betäubt oder getötet;
(b) das Tier (12) wird durch Umfallerlassen in eine seitlich liegende Position auf einem ersten Transporteur (4) gebracht, wobei der Tierrücken in Transportrichtung (26) weist;
(c) und während des Transports auf dem ersten Transporteur (4) wird das Tier (12) abgestochen und entblutet;
(d) das Tier (12) wird an einen zweiten Transporteur (6) übergeben und auf diesem in auf dem Rücken liegender Position weitertransportiert,
(e) und das Tier (12) wird kopfunten hängend mittels eines Förderers (44, 46) weitertransportiert, wobei weitere Schlachtschritte durchgeführt werden;
**dadurch gekennzeichnet,**
daß nach dem Verfahren Großtiere, insbesondere Rinder, geschlachtet werden und daß bei jedem Tier (12) einer Reihe von Tieren (12)
(f) während des Transports auf dem zweiten Transporteur (6) die Hinterfüße (34) des Tiers (12) abgesetzt und das Tier (12) mit beiden Hinterbeinen (36) an Transporthaken (38) angehängt wird.

2. Verfahren nach Anspruch 1,
**dadurch gekennzeichnet,**
daß auf dem zweiten Transporteur (6) die Längserstreckung des Tiers (12) im wesentlichen in Transportrichtung (28) weist.

3. Schlachtanlage, bei der folgende Einrichtungen hintereinander vorgesehen sind:
(a) eine Betäubungsbox (2) oder eine Tötungsbox;
(b) ein erster Transporteur (4) für ein Transportieren der Tiere (12) in seitlich liegender, mit dem Rücken in Transportrichtung (26) weisender Position, wobei dem ersten Transporteur (4) eine Abstechstation (20) zugeordnet ist;
(c) ein zweiter Transporteur (6) für ein Transportieren der Tiere (12) in auf dem Rücken liegender Position;
(d) ein Elevator (8) zum Wegheben der angehängten Tiere (12) von dem zweiten Transporteur (6);
(e) und ein Förderer (44, 46) zum Fördern der kopfunten hängenden Tiere (12) zu weiteren Schlachtstationen,
**dadurch gekennzeichnet,**
daß bei der für Großtiere, insbesondere Rinder, ausgebildeten Schlachtanlage
(f) dem zweiten Transporteur (6) Arbeitsstationen (32) zum Absetzen beider Hinterfüße (34) jedes Tiers (12) und zum Anhängen der beiden Hinterbeine (36) jedes Tiers (12) an Transporthaken (38) zugeordnet sind.

4. Schlachtanlage nach Anspruch 3,
**dadurch gekennzeichnet,**
daß der zweite Transporteur (6) eine Transportrichtung (28) quer zu der Transportrichtung (26) des ersten Transporteurs (4) hat.

5. Schlachtanlage nach Anspruch 3 oder 4,
**dadurch gekennzeichnet,**
daß dem ersten Transporteur (4) eine Arbeitsstation (22) zum Abbinden der Speiseröhre und/oder eine Arbeitsstation (24) zur Reinigung des Afterbereichs zugeordnet ist.

6. Schlachtanlage nach einem der Ansprüche 3 bis 5,
**dadurch gekennzeichnet,**
daß zum Verhindern von unerwünscht weitgehendem Abrollen der Schlachttiere (12) bei der Übergabe von der Betäubungsbox (2) oder der Tötungsbox auf den ersten Transporteur (4) in seitlichem Abstand von der Box (2) oberhalb des ersten Transporteurs (4) eine bewegbare Wand (16) vorgesehen ist, die in Sperrstellung ein Abrollen des betreffenden Schlachttiers (12) über eine seitlich liegende, mit dem Rücken in Transportrichtung (26) des ersten Transporteurs (4) weisende Position hinaus verhindert und in Offenstellung ein Passieren des Schlachttiers (12) in der genannten Position erlaubt.

7. Schlachtanlage nach einem der Ansprüche 3 bis 5,
**dadurch gekennzeichnet,**
daß zum Verhindern von unerwünscht weitgehendem Abrollen der Schlachttiere (12) bei der Übergabe von der Betäubungsbox (2) oder der Tötungsbox auf den ersten Transporteur (4) in seitlichem Abstand von der Box (2) oberhalb des ersten Transporteuers (4) eine im wesentlichen in Richtung der Längserstreckung der Schlachttiere (12) verlaufende Stange (18) vorgesehen ist, deren Abstand von der Oberseite des ersten Transporteurs (4) derart bemessen ist, daß ein Abrollen des betreffenden Schlachttiers (12) über eine seitlich liegende, mit dem Rücken in Transportrichtung des ersten Transporteurs (4) weisende Position hinaus verhindert ist und ein Passieren des Schlachttiers (12) in der genannten Position unter der Stange (18) hindurch möglich ist.

## Claims

1. A method of slaughtering animals, wherein the following steps are performed with each animal (12) of a series of animals (12):
(a) the animal (12) is stunned and killed in standing position;
(b) the animal (12) is allowed to fall over so as to be brought into a position on a first conveyor (4) in which it is lying on a side, with the back of the animal being directed in conveying direction (26);
(c) and during conveyance on said first conveyor (4) the animal (12) is stuck and bled;
(d) the animal (12) is transferred to a second conveyor (6) and conveyed further thereon in a position lying on its back,
(e) and the animal (12) is conveyed further by a conveying means (44, 46) with its head hanging down while additional slaughtering steps are carried out,
**characterized in that**
the method is used for slaughtering large animals, in particular cattle, and in that for each animal (12) of a series of animals (12),
(f) during conveyance on the second conveyor (6), the rear feet (34) of the animal (12) are removed and the animal (12) is suspended with both rear legs (30) on conveying hooks (38).

2. The method of claim 1,
characterized in that on said second conveyor (6) the longitudinal direction of the animal (12) is directed substantially in conveying direction (28).

3. A slaughter plant in which the following facilities are provided in succession:
(a) a stunning box (2) or a killing box;
(b) a first conveyor (4) for conveying the animals (12) in a position lying on a side and with the back directed in conveying direction (26), with the first conveyor (4) having a sticking station (20) associated therewith;
(c) a second conveyor (6) for conveying the animals (12) in a position lying on the back;
(d) an elevator (8) for lifting off the suspended animals (12) from the second conveyor (6);
(e) and a conveying means (44, 46) for conveying the animals (12) suspended head-down to further slaughtering stations,
**characterized in that** in the slaughter plant designed for large animals, in particular cattle,
(f) the second conveyor (6) has working stations (32) associated therewith for removing both rear feet (34) of each animal (12) and for suspending the two rear legs (36) of each animal (12) on conveying hooks (38).

4. A slaughter plant according to claim 3,
characterized in that the second conveyor (6) has a conveying direction (28) transversely of the conveying direction of the first conveyor (4).

5. A slaughter plant according to claim 3 or 4,
characterized in that the first conveyor (4) has associated therewith a working station (22) for ligating the oesophagus and/or a working station (24) for cleaning the anus region.

6. A slaughter plant according to any one of claims 3 to 5,
characterized in that, for preventing an undesirably large extent of rolling of the slaughter animals (12) upon transferal from the stunning box (2) or killing box to the first conveyor (4), there is provided a movable wall (16) above the first conveyor (4) in laterally spaced apart manner from the box (2), said wall, in the blocking position, preventing rolling of the particular slaughter animal (12) beyond a position lying on a side and with its back directed in conveying direction (4) of the first conveyor (4) and, in the open position, allowing passage of the slaughter animal (12) in said position.

7. A slaughter plant according to any one of claims 3 to 5,
characterized in that, for preventing an undesirably large extent of roiling of the slaughter animals (12) upon transferal from the stunning box (2) or killing box to the first conveyor (4), there is provided a rod (18) extending substantially in the direction of the longitudinal extension of the slaughter animals (12) and being spaced apart from the top side of the first conveyor (4) by such a distance that it prevents rolling of the particular slaughter animal (12) beyond a position lying on a side and with its back directed in conveying direction of the first conveyor (4) and allows passage of the slaughter animal (12) in said position underneath the rod (18).

## Revendications

1. Procédé d'abattage d'animaux dans lequel il est procédé de la façon suivante avec chaque animal (12) d'une suite d'animaux (12) :
(a) l'animal (12) est assommé ou tué debout;
(b) on fait tomber l'animal (12) dans une position couchée sur le côté sur un premier convoyeur (4), le dos de l'animal indiquant la direction du transport (26);
(c) et pendant le transport sur le premier convoyeur (4) l'animal (12) est saigné;
(d) l'animal est transféré sur un deuxième convoyeur (6) et continue d'être transporté sur celui-ci en position couchée sur le dos,
(e) et l'animal (12) continue d'être transporté suspendu la tête en bas au moyen d'un transporteur (44, 46), d'autres étapes de l'abattage étant effectuées à l'occasion de ce transport;
caractérisé en ce que
selon le procédé de grands animaux, en particulier des boeufs, sont abattus et en ce que pour chaque animal (12) d'une suite d'animaux (12)
(f) pendant le transport sur le deuxième convoyeur (6) les pieds arrières (34) de l'animal (12) sont coupés et l'animal (12) est suspendu à des crochets de transport (38) par les deux jambes arrières (36).

2. Procédé selon la revendication 1,
caractérisé en ce que
la direction de la longueur de l'animal (12) sur le deuxième convoyeur (6) est sensiblement la direction du transport (28).

3. Abattoir dans lequel les dispositifs successifs suivants sont prévus :
(a) un box d'anesthésie (2) ou un box d'abattage;
(b) un premier convoyeur (4) pour un transport de l'animal (12) dans une position couchée sur le côté avec le dos indiquant la direction du transport (26), un poste de saignée (20) étant associé au premier convoyeur (4);
(c) un deuxième convoyeur (6) pour un transport de l'animal (12) en position couchée sur le dos;
(d) un élévateur (8) pour soulever l'animal (12) suspendu du deuxième convoyeur (6);
(e) et un transporteur (44, 46) pour transporter l'animal (12) suspendu la tête en bas à des postes d'abattage ultérieurs,
caractérisé en ce que
dans l'abattoir conçu pour de grands animaux, en particulier des boeufs,
(f) des postes de travail (32) pour couper les deux pieds arrières (34) de chaque animal (12) et pour suspendre les deux jambes arrières (36) de chaque animal (12) à des crochets de transport sont associés au deuxième convoyeur (6).

4. Abattoir selon la revendication 3,
caractérisé en ce que
le deuxième convoyeur (6) a une direction de transport (28) transversale par rapport à la direction de transport (26) du premier convoyeur (4).

5. Abattoir selon la revendication 3 ou 4,
caractérisé en ce
qu'un poste de travail (22) pour enlever l'oesophage et/ou un poste de travail (24) pour nettoyer la zone anale sont associés au premier convoyeur (4).

6. Abattoir selon l'une quelconque des revendications 3 à 5,
caractérisé en ce que
pour empêcher que les animaux de boucherie (12) roulent de façon importante et indésirable lors du transfert du box d'anesthésie (2) ou du box d'abattage sur le premier convoyeur (4), une paroi mobile (16) est prévue à distance latérale du box (2) au dessus du premier transporteur (4), qui empêche en position de barrage que l'animal de boucherie (12) concerné roule au delà d'une position couchée sur le côté avec le dos indiquant la direction de transport (26) du premier convoyeur (4) et permet en position d'ouverture un passage de l'animal de boucherie (12) dans ladite position.

7. Abattoir selon l'une quelconque des revendications 3 à 5,
caractérisé en ce que
pour empêcher que les animaux de boucherie (12) roulent de façon importante et indésirable lors du transfert du box d'anesthésie (2) ou du box d'abattage sur le premier convoyeur (4), une barre s'étendant sensiblement dans la direction de la longueur des animaux de boucherie (12) est prévue à distance latérale du box (2) au dessus du premier transporteur (4) et à une distance telle de la face supérieure du premier convoyeur (4) qu'elle empêche que l'animal de boucherie (12) concerné puisse rouler au delà d'une position couchée sur le côté avec le dos indiquant la direction de transport du premier convoyeur (4) et qu'elle permette un passage de l'animal de boucherie (12) dans ladite position sous la barre (18).
